# EUROPÄISCHE PATENTSCHRIFT

(11) **EP 0 887 458 B1**
(45) Veröffentlichungstag und Bekanntmachung des Hinweises auf die Patenterteilung: **04.09.2002**
(21) Anmeldenummer: 98106817.4
(22) Anmeldetag: 15.04.1998
(51) Int. Cl.: D21B 1/32, D21D 5/04, D21D 5/20, D21D 5/22

(54) **Verfahren zum Suspendieren und Reinigen von störstoffhaltigen Papierrohstoffen**
Process to suspend and clean a paper stock containing contaminants
Procédé pour tenir en suspension et nettoyer une pulpe de papier contenant des impuretés

(30) Priorität: 26.06.1997 DE 19727184
(43) Veröffentlichungstag der Anmeldung: 30.12.1998
(73) Patentinhaber: Voith Paper Patent GmbH, 89522 Heidenheim (DE)
(72) Erfinder: Karbstein, Peter-Paul, 89522 Heidenheim (DE)

(56) Entgegenhaltungen:
- FR-A- 2 410 700
- US-A- 4 167 249
- US-A- 4 222 817
- US-A- 4 387 856
- US-A- 4 456 183
- US-A- 4 641 790
- N.N.; PTS-MANUSKRIPT: "PAPIERTECHNIK", 1992, PTS VERLAG; BAUMGARTEN H.L.,FÖRSTER W., MÜNCHEN

## Beschreibung

Die Erfindung betrifft ein Verfahren gemäß dem Oberbegriff des Anspruchs 1, wie beispielsweise offenbart in Papiertechnik, N.N.; Baumgarten H.L. (Hrsg.), München, PTS-Verzag, PTS-MS01/92, seiten 2.2-12 bis 2.2-13.

Bekanntlich werden in einem großen Umfang Papierrohstoffe zur Papierherstellung verwendet, welche einen mehr oder weniger großen Anteil an Störstoffen enthalten. Derartige Störstoffe sind überwiegend Kunststoffteile und -folien, Drähte, Glasscherben, Sand etc. Selbstverständlich sollen die Störstoffe möglichst vollständig entfernt werden. Zum einen, um die zur Bearbeitung benutzten Maschinen vor Verschleiß zu schützen und zum anderen wegen der Qualitätsanforderungen an das spätere Papier. Bewährt haben sich Verfahren, bei denen der Papierrohstoff zuerst bei einem Trockengehalt von mehr als 8 % aufgelöst wird. Das heißt, nach Vermischung mit Wasser wird der Rohstoff durch mechanische Bearbeitung zerteilt, wobei infolge des Quellens der Papierrohstoffe diese zerfallen, während ein großer Teil der Störstoffe seine Festigkeit beibehält. Dadurch bleiben z.B. Plastikfolien relativ großflächig erhalten, und die Papierbahnen können in Einzelfasern oder Stippen zerlegt werden. Wenn dieser Zustand erreicht ist, wird weiteres Wasser zugegeben, so daß eine Suspension entsteht, die in der Regel pumpfähig ist und einen relativ hohen Anteil von Störstoffen enthält. Daher nimmt der nachfolgende Siebapparat eine stark verunreinigte Suspension auf. Durch das darin vorhandene Sieb hindurch können Faserbestandteile, welche keine groben Störstoffe mehr enthalten, als Gutstoff-Fraktionen abgezogen werden, was dazu führt, daß sich die Suspension innerhalb des Sortierapparates - also die nicht als Gutstoff abgeführt wird - ständig mit Störstoffen anreichert. Üblicherweise wird nach Abschluß des Ableervorganges der Siebapparat auf eine nachgeschaltete Sortiervorrichtung, z.B. eine Siebtrommel, entleert. Auf diese Weise ist zwar ein durchaus praktikables Verfahren bekannt, es ist jedoch aufwendig und erfordert recht große Maschinen.

Siebapparate, die geeignet sind, um die vom Auflöseapparat kommende Suspension in Rotation zu versetzen und dadurch im zentralen Bereich Störstoffe aufzukonzentrieren sowie einen Gutstoff durch ein Sieb hindurch abzuziehen, sind an sich bekannt. So zeigt z.B. die US 4,456,183 einen sogenannten Fiberizer mit einem tangentialen Zulauf für die zu säubemde Suspension und einem zentralen Auslauf, aus dem die aufkonzentrierten Störstoffe abgezogen werden können. Ferner ist ein Sieb vorhanden, das die mit Faserstoff angereicherte Gutstoff-Fraktion passieren läßt. Das Sieb wird durch einen Räumer von Verstopfungen frei gehalten. Eine andere Apparatur, bekannt aus US 4,167,249 unterscheidet sich davon im wesentlichen dadurch, daß sie mit vertikal stehender Rotorwelle und waagerechtem Sieb betrieben wird.

Eine weitere Publikation, nämlich die FR-A-2 410 700 zeigt einen waagerecht liegenden Fiberizer, bei dem die vom Stofflöser kommende Suspension über eine Pumpe in eine Siebmaschine eingeführt wird. Dabei wird in dieser Maschine neben den im Zentrum angereicherten Rejekt auch der sich an der Peripherie sammelnde Schwerschmutz durch einen entsprechenden Stutzen abgeleitet. Diese Schwerschmutz-Fraktion wird in einem Hydrozyklon gereinigt und dann über eine Pumpe in den Siebapparat zurückgeführt. Dieses Verfahren ist offensichtlich auf einen Stofflöser abgestimmt, der mit einer Konsistenz arbeitet, die wesentlich unter 8 % liegt. Es ist zu erwarten, daß die verwendeten Apparate relativ groß ausgeführt sein müssen, um einen sicheren Betrieb zu gewährleisten.

Die US 4.641,790 zeigt Verfahrensbeispiele mit einem als Sekundärstofflöser verwendeten Siebapparat (Turboseparator). Sie sind relativ aufwendig (Auflösung ebenfalls bei einer Konsistenz unter 8 %) und befassen sich hauptsächlich mit der Waschbehandlung der aus dem Zentrum des Siebapparates abgezogenen Störstoffe.

Eine spezielle Ausgestaltung des bereits erwähnten Fiberizer zeigt die US 4,387,856. Dieser wird im Betrieb entsprechend den Anforderungen optimal geregelt, indem das Antriebsdrehmment des Rotors ermittelt wird.

Der Erfindung liegt die Aufgabe zugrunde, ein Verfahren der angegebenen Art zu schaffen, das mit einem geringeren Aufwand betrieben werden kann, insbesondere auch mit kleineren Maschineneinheiten, und/oder mit dem es möglich ist, auch Papierrohstoffe mit noch höherem Störstoffgehalt wirtschaftlich aufzubereiten.

Diese Aufgabe wird durch die im Kennzeichen des Anspruchs 1 genannten Merkmale vollständig gelöst.

Durch die beschriebenen Maßnahmen wird der Betrieb der das Verfahren ausführenden Anlage wesentlich verbessert und vergleichmäßigt. Es ist nämlich möglich, schon während des Ableerschrittes die am Sieb des Siebapparates abgewiesenen Störstoffe sofort wieder herauszuführen. Hierbei ist anzumerken, daß nach dem Auflöseschritt die Suspension weit genug aufbereitet ist, um einen raschen Trennvorgang in dem Siebapparat zu gestatten. Mit zu hohen Faserverlusten ist schon deshalb nicht zu rechnen, weil der gut aufgeschlossene Stoff anschließend sortiert wird.

Der Abzug aus dem zentralen Bereich des Siebapparates ist wichtig, weil sich die Störstoffe bevorzugt in seiner Mitte ansammeln. Wegen des kontinuierlichen Abzuges bleibt die ganze Strömung konstant und ist definiert. Eine zentrale Wirbelstütze im Siebapparat kann die Strömung weiter stabilisieren. Die Verweilzeit der Störstoffe im Siebapparat ist beträchtlich kürzer, und es erfolgt keine wesentliche Zunahme des Störstoffgehaltes während des Ableerschrittes. Wegen des geringeren Störstoffgehaltes kann der Siebapparat effektiver betrieben werden; andererseits ist es auch möglich, eine höhere Schmutzfracht in der Suspension zuzulassen und damit auch einen höheren Störstoffgehalt im Papierrohstoff. In der Regel liegt dieser zwar zwischen 0,5 und 3 %; es gibt aber durchaus Fälle mit Rohstoffen, die bis zu 35 % Störstoffe enthalten.

Ein weiterer Vorteil liegt darin, daß die Sortiervorrichtung, die die aus dem Siebapparat abgeführten Störstoffe aufnimmt, besser ausgelastet wird, da sich ihre Betriebs-Taktzeit wesentlich verlängert. Größere Auslastung bedeutet aber, daß eine kleinere Maschineneinheit ausreicht, um denselben Effekt zu erzielen.

In der Regel wird der im Siebapparat herrschende Druck nicht ausreichen, um einen kontinuierlichen Abzug der aufkonzentrierten Störstoffe zu gewährleisten. Das gilt zumindest, wenn zwischen dem Stofflöser und dem Siebapparat nur eine geringe geodätische Höhendifferenz besteht. Dann sind zwei Möglichkeiten denkbar: Entweder es wird zwischen dem Stofflöser und dem Siebapparat eine Ableerpumpe eingesetzt, die den Siebapparat unter den notwendigen Überdruck setzt oder an der Zentralöffnung des Siebapparates, an der die aufkonzentrierten Störstoffe abgezogen werden, wird eine Saugpumpe angeschlossen. Diese Saugpumpe könnte mit Vorteil eine Schleuderradpumpe sein; sie muß auf jeden Fall geeignet sein, die verunreinigte Suspension störungsfrei zu fördern.

Die Verdünnung des Faserstoffes nach dem Auflöseschritt kann noch im Stofflöser oder auch danach, z.B. in der Ableerleitung erfolgen. Meist ist es am besten, wenn die Suspension aus dem Stofflöser in den Siebapparat abfließt, ohne daß sie ein Sieb oder eine vergleichbare Vorrichtung passiert. Eine frühzeitige Entfernung grober Schwerteile kann aber sinnvoll sein.

Die Behandlung der als Gutstoff aus dem Siebapparat entfernten Fraktion ist an sich bekannt und muß nicht mehr beschrieben werden. In der Regel reicht die an dieser Stelle vorliegende Stoffreinheit allerdings nicht ganz aus, weshalb weitere Reinigungs- und/oder Sortierstufen nachgeschaltet sind.

Die Erfindung wird beschrieben und erläutert anhand von Zeichnungen. Dabei zeigen:
- Fig. 1: ein Schema einer für das Verfahren geeigneten Anlage;
- Fig. 2 und 3: jeweils eine Anlagenvariante;
- Fig. 4: schematisch: Einen speziellen Siebapparat.

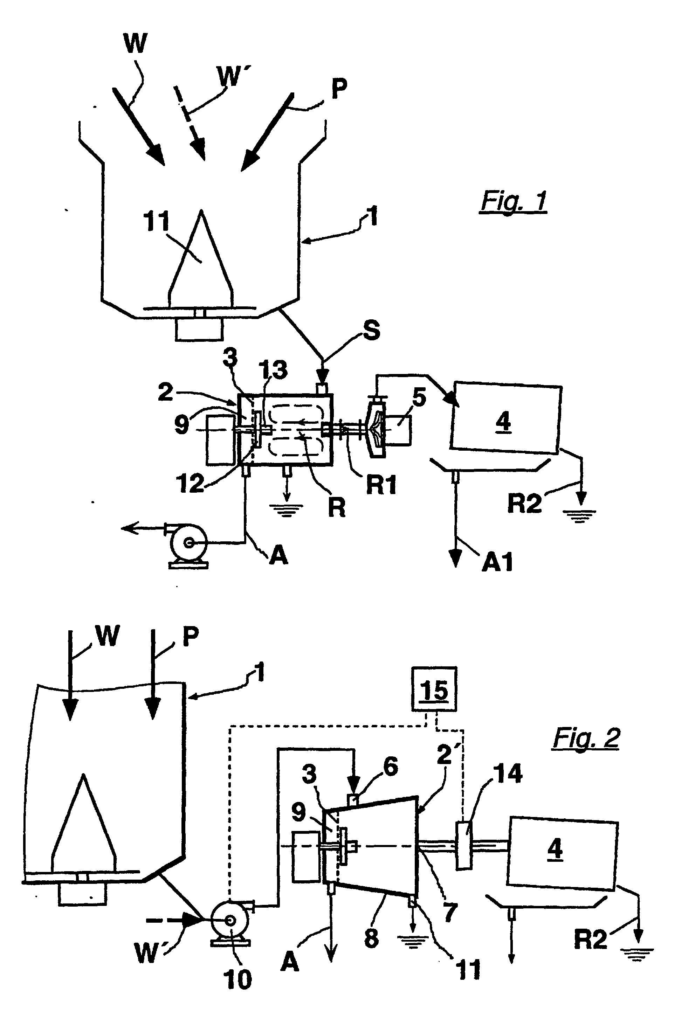

In Fig. 1 erkennt man einen Stofflöser 1, der hier die Funktion des Auflöseapparates übernimmt. Denkbar wäre es, anstelle des Stofflösers auch z.B. eine Auflösetrommel zu verwenden. In an sich bekannter Art und Weise wird in dem Stofflöser 1 der Papierrohstoff P mit dem Wasser W vermischt und bei einem Trockengehalt von mindestens 8 % durch einen Rotor 11 mechanisch bearbeitet. Auf diese Weise wird der Auflöseschritt durchgeführt. Danach wird weiteres Wasser W' in den Stofflöser zugegeben, wodurch eine Suspension S von unter 8 % entsteht, die anschließend abgeführt werden kann. In dem hier gezeigten Fall erfolgt das Ausleiten der Suspension S aus dem Stofflöser ohne Zwischenschaltung eines Siebes direkt in den Siebapparat 2. Dieser enthält mindestens ein Sieb 3, hier als Plansieb ausgeführt, welches durch einen Rotor 12 von Verstopfungen freigehalten wird. Die Öffnungen des Siebes können runde Löcher sein mit einem Durchmesser zwischen 2 und 6 mm. Die Suspension, die das Sieb 3 passiert hat, sammelt sich im Gutstoffraum 9 und wird als Gutstoff A mit einer Pumpe abgeführt. Innerhalb des Siebapparates 2 konzentrieren sich die am Sieb 3 zurückgehaltenen Störstoffe R auf und werden aus dem zentralen Bereich des Siebapparates 2 kontinuierlich in eine Sortiervorrichtung 4 abgeleitet. Der Rotor 12 trägt in dem hier gezeigten Beispiel in seinem Zentrum. einen Hohlzylinder 13, der als Wirbelstütze dient und dadurch die Aufkonzentrierung der Störstoffe im zentralen Bereich unterstützt. Als Sortiervorrichtung 4 ist eine drehbare Siebtrommel angedeutet, es sind aber auch andere entsprechend geeignete Apparate denkbar. Die Sortiervorrichtung 4 bildet eine Schmutzfraktion R2 und eine Gutstoff-Fraktion A1.

In Fig. 2 wird eine Anlage gezeigt, die das Verfahren in einer etwas abgeänderten Form ermöglicht. Es wird nämlich der mit Wasser W vermischte Papierrohstoff P aus dem Stofflöser 1 bei relativ hoher Konzentration - also über 8 % - abgeführt und unmittelbar vor einer Ableerpumpe 10 mit weiterem Wasser W' verdünnt. Auf diese Weise kann der Stofflöser 1 kleiner gehalten werden. Eine weitere Abänderung liegt darin, daß das Gehäuse 8 des Siebapparates 2' eine konische Form hat. Dadurch lassen sich insbesondere Schwerteile schneller und leichter an der Gehäusewand konzentrieren und durch einen Schwerteilauslaß 11 ausleiten. Selbstverständlich ist diese Form des Siebapparates auch in einer Anlage gemäß Fig. 1 anwendbar. Wegen der Verwendung einer Ableerpumpe 10 kann der Siebapparat 2' unter einem Druck stehen, der ausreicht, um die abgeleiteten Störstoffe R1 ohne eine weitere Pumpe auszuleiten. Der Strom der Störstoffe R1 kann geregelt werden, indem z.B. das Signal eines Durchflußmessers 14 erfaßt und in einem Regler 15 verarbeitet wird, der die Drehzahl der Ableerpumpe 10 steuert.

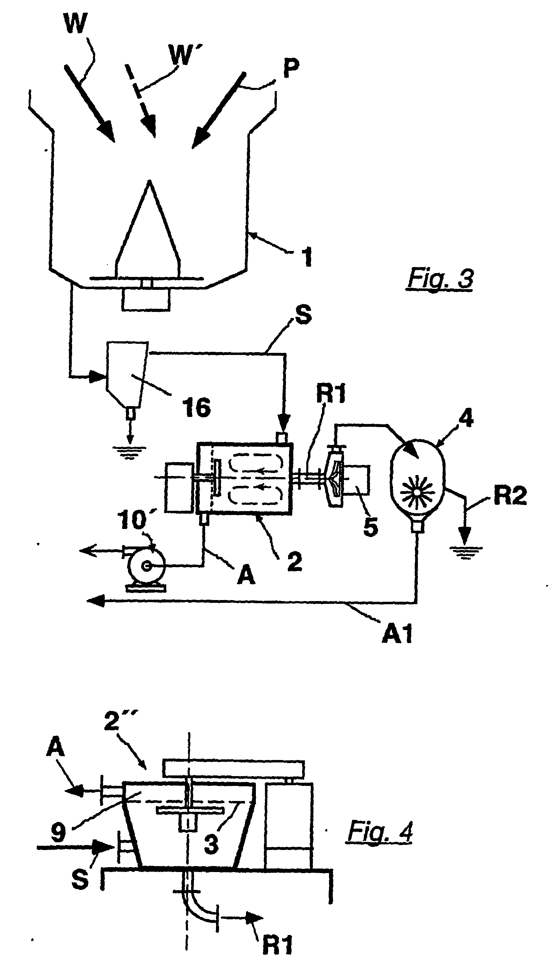

Wie Fig. 3 zeigt, kann es auch von Vorteil sein, wenn die Suspension vor dem Zuleiten in den Siebapparat 2 mit einem speziellen Schwerteilabscheider 16 von den gröbsten Schwerteilen gereinigt wird. Als Sortiervorrichtung (4) ist im hier gezeigten Fall ein sogenannter Rejektsortierer vorgesehen, bei dem der zu sortierende Stoff in einen freien Raum oberhalb eines liegenden Rotors geschleudert und dabei aufgelockert wird, so daß er mit Hilfe von Sieben in eine Gutstoff- und eine Rejekt-Fraktion trennbar ist In dem hier gezeigten Beispiel ist die Ableerpumpe 10' dem Siebapparat 2 nachgeschaltet. Diese Anordnung bringt Vorteile, wenn die Störstoffe die Betriebssicherheit der Ableerpumpe beeinträchtigen können.

Während in den Fig. 1 bis 3 die Siebapparate jeweils mit horizontaler Mittellinie angeordnet waren, zeigt die Fig. 4 eine weitere Möglichkeit, nämlich einen Siebapparat 2'', bei dem die Symmetrielinie senkrecht steht und der Gutstoff A über ein oberhalb des Rotors liegenden Siebes abgezogen wird. Die Zugabe der Suspension erfolgt weiter unten und die Abfuhr der angereicherten Störstoffe R1 am Boden des Siebapparates. Ein solcher Siebapparat ist besonders unanfällig gegen Verschleiß durch Grob- und Schwerteile.

## Patentansprüche

1. Verfahren zum Suspendieren und Reinigen von störstoffhaltigen Papierrohstoffen, insbesondere von Altpapier,
unter Verwendung eines Auflöseapparates, in dem der Papierrohstoff (P) mit Wasser (W) vermischt und bei einem Trockengehalt von mindestens 8 % durch einen Auflöseschritt mechanisch bearbeitet,
danach mit weiterem Wasser (W') zu einer Suspension (S) von unter 8 % Trockengehalt verdünnt wird,
wonach diese Suspension (S) durch einen Ableerschritt in einen Siebapparat (2, 2',2'') geführt wird,
in dem die Suspension in Rotation versetzt wird, wodurch sich im zentralen Bereich des Siebapparates (2, 2', 2'') Störstoffe (R) aufkonzentrieren
und aus dem durch das Sieb (3) hindurch eine mit Faserstoff angereicherte Fraktion als Gutstoff (A) abgezogen wird,
**dadurch gekennzeichnet,**
**daß** die im zentralen Bereich des Siebapparates (2,2', 2'') aufkonzentrierten Störstoffe (R 1) kontinuierlich aus diesem abgeleitet und einer
Sortiervorrichtung (4) zugeführt werden und daß die kontinuierliche Entfernung bereits während des Ableerschrittes beginnt.

2. Verfahren nach Anspruch 1,
**dadurch gekennzeichnet,**
**daß** die kontinuierliche Ableitung der aufkonzentrierten Störstoffe (R1) aus dem Siebapparat (2, 2', 2'') zu Anfang des Ableerschrittes beginnt.

3. Verfahren nach Anspruch 1 oder 2,
dadurch gekennzelchnet,
daß die Suspension (S) aus dem Auflöseapparat ohne Zwischenstapelung in den Siebapparat (2,2', 2'') entleert wird.

4. Verfahren nach Anspruch 1, 2, oder 3,
**dadurch gekennzeichnet,**
**daß** die Suspension (S) aus dem Auflöseapparat ohne Zwischenschaltung eines Siebes in den Siebapparat (2, 2', 2'') entleert wird.

5. Verfahren nach Anspruch 1, 2, 3 oder 4,
**dadurch gekennzeichnet,**
**daß** die kontinuierliche Ableitung der Störstoffe (R1) aus dem Siebapparat (2, 2', 2'') in die Sortiervorrichtung (4) ohne Zwischenstapelung erfolgt.

6. Verfahren nach Anspruch 1,2,3,4 oder 5,
**dadurch gekennzeichnet,**
**daß** für die kontinuierliche Ableitung der Störstoffe (R1) eine Saugpumpe (5) verwendet wird.

7. Verfahren nach Anspruch 6,
**dadurch gekennzeichnet,**
**daß** die Saugpumpe (5) eine Wirbelradpumpe ist.

8. Verfahren nach einem der voranstehenden Ansprüche,
**dadurch gekennzeichnet,**
**daß** der Auflöseapparat ein Stofflöser (1) ist.

9. Verfahren nach einem der voranstehenden Ansprüche,
**dadurch gekennzeichnet,**
**daß** die Sortiervorrichtung (4) ein Rejektsortierer ist.

10. Verfahren nach Anspruch 9,
**dadurch gekennzeichnet,**
**daß** die Sortiervorrichtung (4) eine Siebtrommel ist.

11. Verfahren nach einem der voranstehenden Ansprüche,
**dadurch gekennzeichnet,**
**daß** der Auflöseschritt bei einem Trockengehalt von mindestens 10 % erfolgt.

12. Verfahren nach Anspruch 11,
**dadurch gekennzeichnet,**
**daß** der Auflöseschritt bei einem Trockengehalt von mindestens 13 % erfolgt.

13. Verfahren nach einem der voranstehenden Ansprüche,
**dadurch gekennzeichnet,**
**daß** die während des Auflöseschrittes übertragene spezifische Arbeit mindestens 20 KWh/to beträgt.

## Claims

1. Process for the suspension and cleaning of paper stocks, in particular waste paper, containing impurities,
using a dissolving unit, in which the paper stock (P) is mixed with water (W) and is mechanically processed, during a dissolving stage, at a dry matter content of at least 8%,
and is then diluted with more water (W') to form a suspension (S) of less than 8% dry matter content,
after which this suspension (S) is fed, during a dump stage, into a filter unit (2, 2', 2"), in which the suspension is caused to rotate, whereby impurities (R) become concentrated in the central area of the filter unit (2, 2', 2"),
and from which a fraction enriched with fibre stock is drawn off, in the form of accepted stock (A), through the sieve (3)
**characterised in that**
the impurities (R1) concentrated in the central area of the filter unit (2, 2', 2") are continuously drained away from this area and passed to a screening unit (4), and **in that** the continuous removal process begins during the dump stage.

2. Process as in Claim 1,
**characterised in that**
the continuous draining away of the concentrated impurities (R1) from the filter unit (2, 2', 2") begins at the start of the dump stage.

3. Process as in Claim 1 or 2,
**characterised in that**
the suspension (S) is emptied out of the dissolving unit into the filter unit (2, 2', 2") without any intermediate accumulation stage.

4. Process as in Claim 1, 2 or 3,
**characterised in that**
the suspension (S) is emptied out of the dissolving unit into the filter unit (2, 2', 2") without the intervention between them of a sieve.

5. Process as in Claim 1, 2, 3 or 4,
**characterised in that**
the continuous draining of the impurities (R1) from the filter unit (2, 2', 2") into the screening unit (4) takes place without any intermediate accumulation stage.

6. Process as in Claim 1, 2, 3, 4 or 5,
**characterised in that**
a suction pump (5) is used for the continuous draining of the impurities (R1).

7. Process as in Claim 6,
**characterised in that**
the suction pump (5) is a vortex vacuum pump.

8. Process as in one of the preceding Claims,
**characterised in that**
the dissolving unit is a pulper (1).

9. Process as in one of the preceding Claims,
**characterised in that**
the screening unit (4) is a reject sorter.

10. Process as in Claim 9,
**characterised in that**
the screening unit (4) is a sieve drum.

11. Process as in one of the preceding Claims,
**characterised in that**
the dissolving stage takes place at a dry matter content of at least 10%.

12. Process as in Claim 11,
**characterised in that**
the dissolving stage takes place at a dry matter content of at least 13%.

13. Process as in one of the preceding Claims
**characterised in that**
the specific energy applied during the dissolving stage is at least 20 kWh per tonne.

## Revendications

1. Procédé pour la mise en suspension et l'épuration de matières premières de papier contenant des contaminants, en particulier des vieux papiers, par utilisation d'un appareil de dissolution dans lequel la matière première de papier (P) est mélangée à de l'eau (W) et est traitée mécaniquement par une étape de dissolution à une siccité d'au moins 8 %, puis est diluée avec de l'eau complémentaire (W') en une suspension (S) d'une siccité inférieure à 8 %, après quoi cette suspension (S) est acheminée, par une étape de vidange, vers un appareil de tamisage (2, 2', 2") dans lequel la suspension est mise en rotation, ce qui fait que dans la zone centrale de l'appareil de tamisage (2, 2', 2"), se concentrent les contaminants (R), et duquel, à travers le tamis (3), est extraite une fraction enrichie en matière fibreuse qui est la pâte à papier finie (A),
**caractérisé en ce que** les contaminants (R1), concentrés dans la zone centrale de l'appareil de tamisage (2, 2', 2"), sont évacuées en continu de celui-ci et acheminées vers un dispositif de tri (4) et **en ce que** l'élimination continue commence déjà pendant l'étape de vidange.

2. Procédé selon la revendication 1, **caractérisé en ce que** l'évacuation continue des contaminants (R1) concentrés de l'appareil de tamisage (2, 2', 2") commence au début de l'étape de vidange.

3. Procédé selon la revendication 1 ou 2, **caractérisé en ce que** la suspension (S) est vidangée de l'appareil de dissolution sans stockage intermédiaire dans l'appareil de tamisage (2,2', 2").

4. Procédé selon la revendication 1, 2 ou 3, **caractérisé en ce que** la suspension (S) est vidangée de l'appareil de dissolution sans interposition d'un tamis dans l'appareil de tamisage (2, 2', 2").

5. Procédé selon la revendication 1, 2, 3 ou 4, **caractérisé en ce que** l'évacuation continue des contaminants (S1) de l'appareil de tamisage (2, 2', 2") s'effectue dans le dispositif de tri (4) sans stockage intermédiaire.

6. Procédé selon la revendication 1, 2, 3, 4 ou 5, **caractérisé en ce qu'**on utilise une pompe d'aspiration (5) pour l'évacuation continue des contaminants (R1).

7. Procédé selon la revendication 6, **caractérisé en ce que** la pompe d'aspiration (5) est une pompe tourbillonnaire.

8. Procédé selon l'une des revendications précédentes, **caractérisé en ce que** l'appareil de dissolution est un pulpeur (1).

9. Procédé selon l'une des revendications précédentes, **caractérisé en ce que** le dispositif de tri (4) est un cribleur à rejet.

10. Procédé selon la revendication 9, **caractérisé en ce que** le dispositif de tri (4) est un tambour de tamisage.

11. Procédé selon l'une des revendications précédentes, **caractérisé en ce que** l'étape de dissolution s'effectue à une siccité d'au moins 10 %.

12. Procédé selon la revendication 11, **caractérisé en ce que** l'étape de dissolution s'effectue à une siccité d'au moins 13 %.

13. Procédé selon l'une des revendications précédentes, **caractérisé en ce que** le travail spécifique effectué pendant l'étape de dissolution est d'au moins 20 kWh/tonne.
